Europäisches Patentamt

European Patent Office

Office européen des brevets

(11) Veröffentlichungsnummer: **0 313 835 B1**

# (12) EUROPÄISCHE PATENTSCHRIFT

(45) Veröffentlichungstag der Patentschrift: **04.03.92**

(51) Int. Cl.⁵: **A01B 49/02**, A01B 33/12

(21) Anmeldenummer: **88115818.2**

(22) Anmeldetag: **26.09.88**

(54) **Prallplatte für eine Gerätekombination mit einer Bodenfräse.**

(30) Priorität: **30.10.87 DE 8714440 U**

(43) Veröffentlichungstag der Anmeldung:
**03.05.89 Patentblatt 89/18**

(45) Bekanntmachung des Hinweises auf die
Patenterteilung:
**04.03.92 Patentblatt 92/10**

(84) Benannte Vertragsstaaten:
**DE FR GB IT**

(56) Entgegenhaltungen:
**EP-A- 0 170 156**
**DE-A- 3 504 684**
**FR-A- 2 342 628**
**FR-A- 2 348 637**
**GB-A- 2 141 611**

(73) Patentinhaber: **Rabewerk GmbH + Co.**

**W-4515 Bad Essen(DE)**

(72) Erfinder: **Warnking, Richard, Dipl.-Ing.**
**Klockenpatt 5**
**W-4515 Bad Essen 1(DE)**

(74) Vertreter: **Missling, Arne, Dipl.-Ing.**
**Patentanwalt Bismarckstrasse 43**
**W-6300 Giessen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Prallplatte in einer Gerätekombination mit einer Bodenfräse, wobei die Prallplatte in Fahrtrichtung hinter der Bodenfräse angeordnet ist und über eine horizontal liegende reelle oder ideelle Achse verschwenkbar am Rahmen der Bodenfräse angeordnet ist, deren Höhe und gegebenenfalls auch deren Neigung relativ zum Rahmen der Bodenfräse einstellbar ist und die Prallplatte von Armen getragen ist, die um die horizontale Achse schwenkbar und festlegbar am Rahmen der Bodenfräse befestigt sind.

Ein Prallblech der eingangs genannten Art ist z.B. aus der DE-A-1 27 23 976 bekannt. Hier sind hinter einer Bodenfräse ein Prallblech und diesem nachgeordnet Särohre angebracht, wobei das Prallblech zweigeteilt ausgebildet ist, wobei beide Prallbleche untereinander über eine horizontale Achse verbunden sind und das obere Ende des obere Prallbleches über eine horizontale Achse am Schlepper angeordnet ist. Das untere Ende des Prallbleches ist zwangsgeführt, so daß beim Anheben dieses geteilten Prallbleches das untere Prallblechteil sowohl verschwenkt wie auch in der Höhe verstellt wird. Der Nachteil dieser bekannten Prallblechausbildung besteht darin, daß bei jeder Änderung der Arbeitstiefe gleichzeitig eine Veränderung der Prallblecheinstellung vorgenommen werden muß, was einen nicht unbedeutenden Arbeitsaufwand bedeutet, zumal hier auch eine Anpassung der Saatrohre vorgenommen werden muß, sofern dieses Prallblech bei einer derartigen Gerätekombination eingesetzt ist.

Aus dem DE-U-1 83 17 739 ist eine Gerätekombination, bestehend aus einer Kreiselegge und einer nachgeschalteten Stabwalze, bekannt, die die Arbeitstiefe der Kreiselegge bestimmt. Zwischen den Kreiseln der Kreiselegge und der Stabwalze ist ein Prallblech beweglich angeordnet, das verhindern soll, daß Erde in die Stabwalze hineingeschleudert wird. Das Prallblech ist hier in der Höhe verstellbar, und zwar erfolgt dies dadurch, daß das Prallblech in unterschiedlichen Höhenstufen am Tragarm für die Stabwalze eingehängt wird. Beim Verändern der Arbeitstiefe ändert sich gleichfalls die Stellung des Prallbleches relativ zur Stabwalze. Eine derartige Gerätekombination ist jedoch nicht zuletzt wegen der labilen Aufhängung des Prallbleches nicht geeignet, im Zusammenhang mit einer Sämaschine eingesetzt zu werden, d.h. bei einer Gerätekombination, bei der das Prallblech die Ablagetiefe des Saatgutes mitbestimmt.

Aus der DE-A-1 27 49 148 ist des weiteren eine Gerätekombination, bestehend aus einer Kreiselegge, einer ersten Walze und einer zweiten, der ersten Walze nachgeschalteten Walze bekannt, wobei vor der ersten Walze ein in der Höhe verstellbares Prallblech angeordnet ist. Des weiteren weist diese Gerätekombination eine Drillmaschine auf, deren Särohre hinter der ersten Walze münden.

Diese Gerätekombination zeigt den Nachteil, daß diese einen großen Schwerpunktabstand von dem sie ziehenden Schlepper aufweist, so daß diese nur von sehr großen Schleppern auszuheben ist. Des weiteren nimmt auch die Prallplatte, die vor der ersten Walze angeordnet und in der Höhe verstellbar ist, einen großen Raum ein, so daß hierdurch gleichermaßen der Schwerpunkt der Gerätekombination nach hinten verschoben wird. Im übrigen dient diese Prallplatte gleichermaßen dazu zu verhindern, daß Erde in die nachgeschaltete offene Walze hineingeschleudert wird und diese verstopfen kann.

Aus der EP-Patentanmeldung 170 165 ist es bereits bekannt, daß eine Prallplatte in Fahrtrichtung hinter einer Bodenfräse angeordnet ist und von Armen getragen wird, die um eine horizontale Achse am Rahmen der Bodenfräse schwenkbar sind. Dabei läßt sich die Höhe der Prallplatte willkürlich verändern, allerdings bleibt ihr Abstand zu dem Ackerboden ansonsten abhängig von der Arbeitstiefe der Bodenfräse. Eine solche Abhängigkeit ist im allgemeinen nicht erwünscht, weil einmal bei jeder Änderung der Arbeitstiefe auch die Höhe der Prallplatte geändert werden muß, und weil andererseits Bodenunebenheiten nicht berücksichtigt werden können.

Weiterhin ist in der DE-Offenlegungsschrift 35 04 684 eine Prallplatte an einer Planiereinrichtung beschrieben, bei der die Prallplatte über ein Gelenkviereck an sogenannten Haltestielen befestigt ist, die ihrerseits am Rahmen einer Kreiselegge fixiert sind. Die Haltestiele können gegebenenfalls auch höhenverstellt werden, um die parallelogrammgeführte Prallplatte extremen Höhenunterschieden anpassen zu können. Im allgemeinen aber gleitet die Prallplatte direkt auf der Erdoberfläche entlang und paßt sich durch das Gelenkviereck den Bodenunebenheiten an. Auch hier hängt es von der Arbeitstiefe bei der Bodenbearbeitung - in diesem Falle durch eine Kreiselegge - ab, ob nicht eine umständliche, von Hand zu bewerkstelligende Höhenverstellung vorgenommen werden muß.

Der Erfindung liegt die Aufgabe zugrunde, eine Prallplatte für eine Gerätekombination der eingangs genannten Art vorzuschlagen, die eine kurze Bauweise der Gerätekombination begünstigt, wodurch der Schwerpunkt der Gerätekombination zum Schlepper hin verlagert wird, die bei ihrer Höhenverstellbarkeit sowie gegebenenfalls bei Verstellbarkeit der Neigung der Prallplatte relativ zur Fahrtrichtung nur wenig Platz einnimmt und die gleichzeitig bei einer Verstellung der Arbeitstiefe automatisch in Höhe mit verstellt wird, wobei vorteilhaft die Neigung zum Erdboden unverändert bleibt.

Die Aufgabe wird mit den Merkmalen des Anspruches 1 gelöst.

Eine erfindungsgemäß ausgebildete Prallplatte wird somit von Armen getragen, die schwenkbar am Rahmen der Bodenfräse befestigt und in vorbestimmten Stellungen relativ zur Bodenfräse festlegbar sind. Die Prallplatte als solche ist an diesen Armen unmittelbar oder mittelbar mittels Gelenkvierecken angeschlossen, wobei mit Hilfe dieser Gelenkvierecke eine Verstellung der Prallplatte relativ zu den sie tragenden Armen sowie eine Festlegung in vorbestimmten Stellungen gegeben ist.

Für die Befestigung einer Prallplatte sind vorteilhaft zwei Arme vorgesehen, die zu beiden Seiten des Rahmens der Bodenfräse angeordnet sind. An jedem dieser Arme ist die Prallplatte über jeweils ein Gelenkviereck angeschlossen, wobei an diesen Armen gleichzeitig eine Packerwalze festgemacht ist, welche die Arbeitstiefe der Gerätekombination bestimmt und damit auch dafür sorgt, daß die Prallplatte einer Veränderung dieser Arbeitstiefe entsprechend folgt, ohne daß eine sonstige Verstellung vorzunehmen wäre.

Mit der ersten Prallplatte wirkt vorteilhaft eine zweite Prallplatte zusammen, die ihrerseits gelenkig am Rahmen der Bodenfräse angeordnet ist und z.B. mittels Federn ständig zur Anlage an der ersten Prallplatte kommt, so daß bei einer Verstellung der ersten Prallplatte zwangsläufig auch die zweite Prallplatte mit verstellt wird, gleich ob die erste Prallplatte aufgrund ihrer Anlenkung mittels des Gelenkvierecks bei der Verstellung der Arme nur eine Höhenbewegung oder aber auch gleichzeitig eine Verschwenkung ausführt.

Gemäß einer weiteren vorteilhaften Ausführungsform münden die Särohre einer mit der Gerätekombination verbundenen Drillmaschine hinter der unteren Prallplatte und vor der nachgeschalteten Bodenwalze, wobei die Ablagetiefe der Saat durch die Einstellung der Prallplatte in Höhe und Neigung relativ zur nachgeschalteten Walze bestimmt wird. Vorteilhaft sind die Särohre an Halterungen befestigt, die mit der Prallplatte verbunden sind. Diese Halterungen sind so ausgebildet, daß die Särohre relativ zur Prallplatte verstellbar angeordnet sind. Durch diese Anordnung ist es möglich, auch bei veränderten Arbeitstiefen der Bodenfräse eine gleichmäßige und vorbestimmte Saatablage zu erhalten.

Zur Verstellung der Neigung der ersten Prallplatte relativ zum Boden können die Lenker des Gelenkvierecks verstellbar ausgebildet sein. Des weiteren ist es vorteilhaft, das Gelenkviereck über einen weiteren, vorzugsweise verstellbaren Lenker mit dem Rahmen der Bodenfräse zu verbinden, so daß in Abhängigkeit der Gestaltung des Gelenkvierecks und der Anlenkpunkte dieses zusätzlichen Lenkers am Gelenkviereck und am Rahmen der Bodenfräse gleichzeitig bei einer Veränderung der Arbeitstiefe der Bodenfräse die Prallplatte in vorbestimmter Weise sowohl in Höhe wie auch in Neigung verstellt wird. Durch diese spezielle Ausbildung und Anlenkung der Bodenwalze an der Gerätekombination ist eine automatische Einstellung der Prallplatte bei Veränderung der Arbeitstiefe der Bodenfräse sowohl in Höhe wie auch gegebenenfalls in Neigung vorbestimmbar. Durch diese Anordnung lassen sich auch Höhenunterschiede der Prallplatte zum Boden bei unterschiedlich großen Arbeitstiefen ausgleichen, die bedingt sind durch den unterschiedlichen Abstand der Bodenwalze und der Prallplatte vom Schwenkpunkt der Arme am Rahmen der Bodenfräse.

Ein weiteres Ausführungsbeispiel gemäß der Erfindung in der Anlenkung der Bodenplatte besteht darin, das Gelenkviereck für die Aufhängung der Prallplatte an den Armen aus zwei Lenkern zu bilden, wobei beide Lenker an der Prallplatte gelenkig angeschlossen sind und ein Lenker eine Verlängerung über seinen Anlenkpunkt hinaus aufweist, an dem der andere Lenker angeschlossen ist. Es ist auch denkbar, die Verlängerung gelenkig am ersten Lenker oder am Arm anzuschließen, wobei dann die Verlängerung über einen vorteilhaft verstellbaren Lenker gegenüber dem ersten Lenker abgestützt ist. Hierdurch läßt sich bei Verschwenkung der Arme die Prallplatte in ihrer Neigung und Höhe noch stärker relativ zu der an den gleichen Armen befestigten Bodenwalze verstellen bzw. die Neigung der Prallplatte zur Lotrechten konstant halten.

Weitere vorteilhafte Ausgestaltungen der Erfindung gehen aus den Unteransprüchen in Verbindung mit Zeichnung und Beschreibung hervor.

Mehrere Ausführungsbeispiele der Erfindung sind im folgenden anhand der Zeichnung näher beschrieben, in dieser zeigen:

Fig. 1    eine Seitenansicht einer erfindungsgemäßen Gerätekombination,

Fig. 2    eine Ausbildung eines Lenkers oder einer Verstelleinrichtung für die Anlenkung einer Prallplatte,

Fig. 3    eine Seitenansicht einer weiteren Ausführungsform der Erfindung und

Fig. 4    ein drittes Ausführungsbeispiel einer erfindungsgemäßen Gerätekombination.

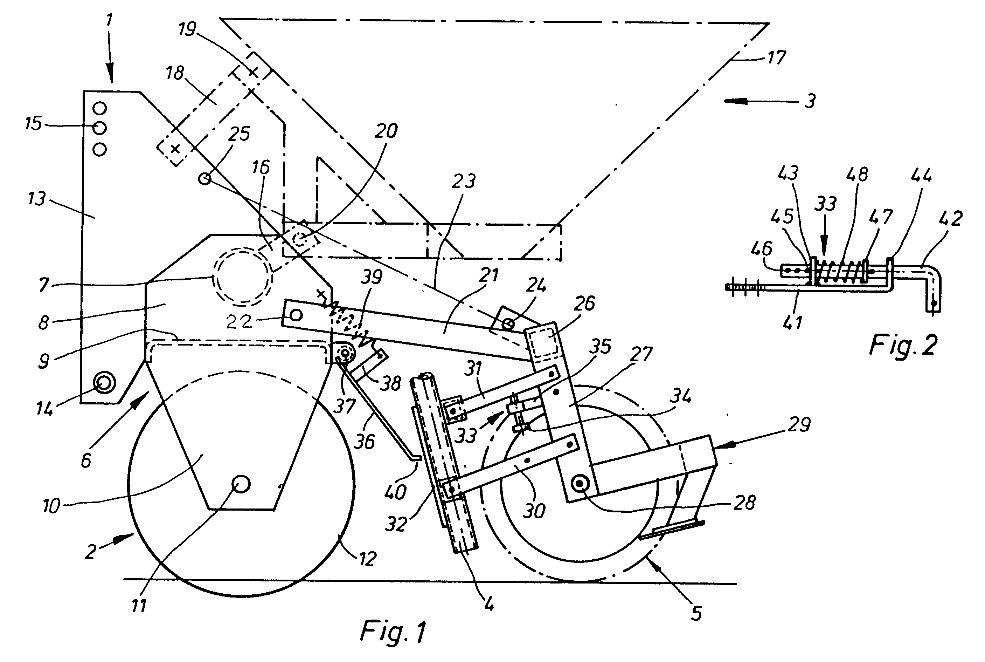

Die in Fig. 1 dargestellte Gerätekombination 1 besteht aus einer Bodenfräse 2, einer Drillmaschine 3 mit Saatrohren 4 sowie einer der Bodenfräse 2 nachgeschalteten Packerwalze 5.

Die Bodenfräse 2 hat einen Rahmen 6, der aus einem zentralen, durchgehenden Rohr 7 sowie zwei Platten 8 besteht, die stirnseitig an dem Rohr 7 angeschweißt sind. Parallel zum Rohr 7 ist eine an den Rändern abgewinkelte Platte 9 angeordnet, die mit den aufrechten Platten 8 verschweißt ist. Hierdurch wird ein verwindungssteifer und stabiler Rahmen 6 erhalten.

Die unteren Enden 10 der Platten 8 tragen die Achse 11 des Werkzeugrotors 12.

Im mittleren Bereich des Rohres 7 ist an diesem und an der Platte 9 ein Turm 13 befestigt, der Anschlußpunkte 14 und 15 für die Unterlenker bzw. Oberlenker eines nicht dargestellten Schleppers aufweist. Die Antriebsaggregate für den Werkzeugrotor wie Gelenkwelle, Übersetzungen, Ketten bzw. Zahnradtriebe, sind der Übersichtlichkeit halber weggelassen worden.

Am Turm 13 wie an einer Lasche 16, die mit dem Rohr 7 verbunden ist, ist ein Saatgutkasten 17 der Drillmaschine 3 befestigt. Die Verbindung des Saatgutkastens 17 erfolgt über eine Lasche 18 sowie die Lasche 16, die in den Anschlußpunkten 19, 20 des Saatgutkastens angreifen, die normalerweise für die Unter- bzw. Oberlenker eines Schleppers bestimmt sind. Hierdurch ist es möglich, bereits vorhandene Saatgutkästen 17 zu verwenden. Ansonsten sind von der Drillmaschine 3 nur noch die Saatrohre 4 dargestellt, um die Übersichtlichkeit der Zeichnung nicht zu beeinträchtigen.

An den beiden Platten 8, die zu den Seiten des Rohres 7 angeordnet sind, sind zwei Arme 21 angeschlossen, die um eine horizontale Achse 22 schwenkbar sind. Die Lage der Arme 21 relativ zum Rahmen 6 der Bodenfräse wird durch einen Lenker 23 bestimmt, der in den Gelenkpunkten 24, 25 am Rahmen 6 der Bodenfräse 2 sowie am Arm 21 angeschlossen ist. Vorteilhaft werden hier zwei Lenker 23 verwendet, die längenveränderlich sind, d.h. sie können als Spannschloß ausgebildet sein.

Die beiden Arme 21 sind über ein Querrohr 26 miteinander verbunden. Das untere Ende 27 der Arme 21 ist abgewinkelt und trägt die Packerwalze 5, die mit ihrer Achse 28 in den unteren Enden 27 drehbar gelagert ist. Ein Abstreifer 29 ist gleichfalls an den unteren Enden 27 befestigt.

Über zwei Lenker 30, 31 ist eine Prallplatte 32 befestigt. Die Lenker 30 und 31 bilden ein Viergelenk. Zur Fixierung der Lage der Lenker 31 relativ zum Arm 21 dient eine Verstelleinrichtung 33, die im einfachsten Fall aus einem Gewindebolzen 34 besteht, der in einer mit dem unteren Ende 27 fest verbundenen Gewindebohrung 35 verstellbar ist und mit seinem Ende gegen den einen Lenker 31 anliegt. Durch diese Verstelleinrichtung wird die tiefste Lage der Prallplatte 32 zum Boden hin eingestellt, während die Prallplatte nach oben, z.B. wenn sie auf ein Hindernis auftrifft, frei ausschwenken kann.

Am Rahmen 6 der Bodenfräse 2 ist eine zweite Prallplatte 36 um eine horizontale Achse 37 schwenkbar gelagert. Die Prallplatte 36 ist mit einem Ansatz 38 versehen, an dem eine Zugfeder 39 angreift, deren anderes Ende am Rahmen 6 der Bodenfräse befestigt ist. Diese Zugfeder hat das Bestreben, die Prallplatte 36 nach oben um die horizontale Achse 37 zu verschwenken. Die Länge der Prallplatte 36 ist jedoch so gwählt, daß diese mit ihrem Ende 40 an der Prallplatte 32 zur Anlage kommt, und zwar in jeder der vorgesehenen Stellungen der Prallplatte 32. Hierdurch ist gewährleistet, daß bei einer Verstellung der Prallplatte 32, sei es in lotrechter Richtung oder aber in Neigungsrichtung, die zweite Prallplatte 36 immer an der ersten Prallplatte 32 zur Anlage kommt und so verhindert, daß Erde nach oben hin weggeschleudert werden kann.

Die Verstelleinrichtung 33 zur Verstellung der Lage der Prallplatte 32 kann auch so ausgebildet sein, wie dies in Fig. 2 dargestellt ist. Die Verstelleinrichtung 33 besteht aus einem zweigeteilten Lenker 41, 42, wobei der Lenker 42 in Führungen 43, 44 des Lenkers 41 verschiebbar ist. Die maximale Länge wird durch einen Bolzen 45 bestimmt, der in Bohrungen 46 des Lenkers 42 eingeschoben ist. Zwischen der Führung 43 und einem Widerlager 47 des Lenkers 42 ist eine Druckfeder 48 angeordnet, die eine Verkürzung des Lenkers 41, 42 gestattet, wodurch wiederum die freie Anhebbarkeit der ersten Prallplatte bei Auftreffen auf ein Hindernis gewährleistet ist.

Es ist auch denkbar, den Lenker 41, 42 gemäß Ausführungsbeispiel 2 als Lenker 30 oder 31 des Gelenkviereks einzusetzen. Man erhält hierdurch ein in seinen Abmessungen veränderbares Gelenkviereck, wodurch die Neigung der Prallplatte 32 relativ zum Ende 27 des Armes 21 einstellbar ist und wodurch auch eine Abfederung der Prallplatte 32 erhalten wird.

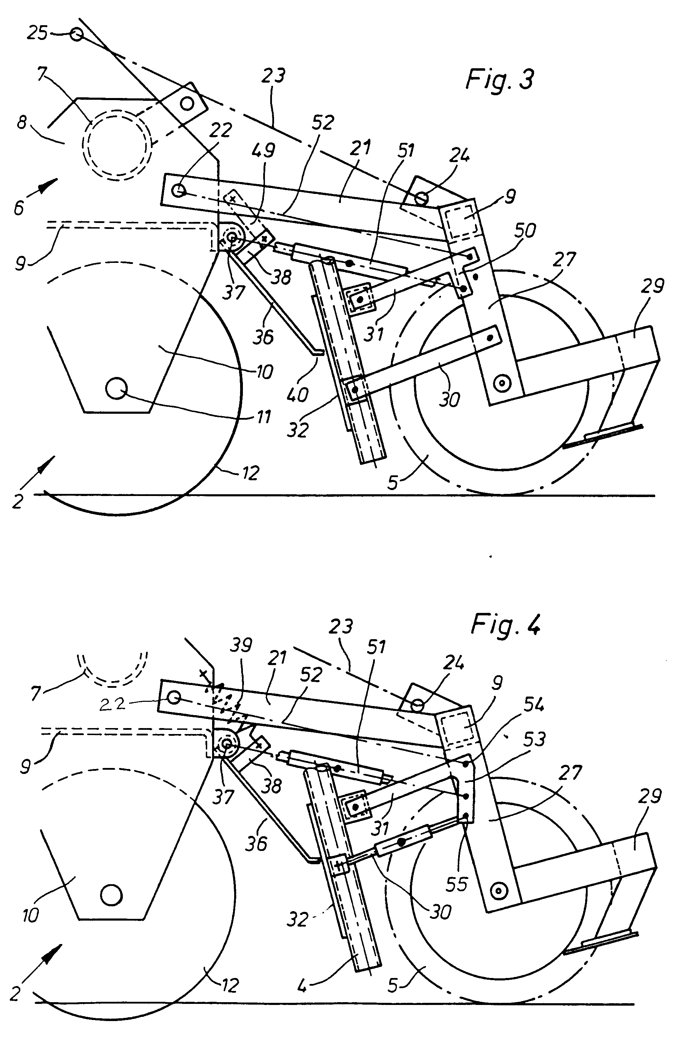

Bei dem Ausführungsbeispiel nach Fig. 3 sind gleiche Teile mit gleichen Bezugszeichen versehen. Im Gegensatz zu dem Ausführungsbeispiel nach Fig. 1 ist die zweite Prallplatte 36 nicht federbelastet, sondern wird über einen Lenker 49, der am Ansatz 38 einerseits angreift und andererseits am Arm 21, derart gesteuert, daß diese der Schwenkbewegung der Prallplatte 32 folgt.

Da der Abstand der Prallplatte 32 und der Packerwalze 5 sich vom horizontal liegenden Schwenkpunkt 22 unterscheidet, ist bei einer Parallelanordnung der beiden Lenker 30, 31 nicht vollständig gewährleistet, daß die Prallplatte 32 die gleichen Höhenveränderungen durchführt, wie dies für die Packerwalze 5 bzw. für den Rahmen 6 der Bodenfräse der Fall ist. Um hier einen Ausgleich zu schaffen, ist am Lenker 31 ein Ansatz 50 angeformt, an den ein verstellbarer Lenker 51 angreift, dessen anderes Ende am Rahmen 6 der Bodenfräse 2 angelenkt ist, und zwar im Ausführungsbeispiel im Schwenkpunkt der zweiten Prallplatte 36. Hierdurch wird wirkungsmäßig ein Ersatzparallelogramm geschaffen, das durch den Lenker 51 sowie durch den gedachten und durch strichpunktierte Linien angedeuteten Lenker 52 gebildet wird. Man erreicht hierdurch eine exakte Anpassung der Höhenverschiebung und Neigungsverstellung der Prallplatte 32 bei einer Verstellung der Arbeitstiefe der Bodenfräse 2, so daß Nachjustierungen der Prallplatte auch bei einer Verstellung der Arbeitstiefe nicht notwendig sind.

Bei dem Ausführungsbeispiel nach Fig. 4 sind gleiche Teile mit gleichen Bezugszeichen versehen. Dieses Ausführungsbeispiel unterscheidet sich dadurch von dem nach Fig. 3, daß nicht nur der zusätzliche Lenker 51 an einer starren Verlängerung 53 des Lenkers 31 angreift, sondern auch der Lenker 30 an dieser im Gelenkpunkt 55 angeschlossen ist. Des weiteren ist der Lenker 30 verstellbar ausgebildet, so daß die Verschiebebewegung der Prallplatte 32 bei einer Verstellung der Arbeitstiefe der Bodenfräse 2 in weitem Umfang vorbestimmt werden kann.

In Abwandlung des Ausführungsbeispiels nach Fig. 4 kann die Verlängerung auch gelenkig in 54 angeschlossen sein. Sie muß dann über einen weiteren Lenker gegenüber dem Lenker 31 abgestützt sein. Hierdurch erreicht man eine große Verstellbreite für die Prallplatte 32.

Was die Anlenkung der Särohre 4 an der Prallplatte 32 betrifft, so sind die Saatrohre 4 an der Platte 32 befestigt, so daß diese den Bewegungen der Prallplatte 32 folgen. Zur individuellen Einstellung der relativen Höhe der Saatrohre zur Prallplatte 32 sind diese längsverschiebbar an der Platte befestigt. Hierdurch kann das Ende der Saatrohre 4 von dem unteren Ende der Prallplatte 32 je nach den Bedürfnissen festgelegt werden. In jedem Fall ist jedoch sichergestellt, daß sich dieser Abstand auch bei einer Veränderung der Arbeitstiefe der Bodenfräse nicht ändert.

**Patentansprüche**

1. Prallplatte (32) in einer Gerätekombination (1) mit einer Bodenfräse (2), wobei die Prallplatte in Fahrtrichtung hinter der Bodenfräse (2) angeordnet ist und über eine horizontal liegende reelle oder ideelle Achse (22) verschwenkbar am Rahmen (6) der Bodenfräse (2) angeordnet ist, und deren Höhe und gegebenenfalls auch deren Neigung relativ zum Rahmen (6) der Bodenfräse (2) einstellbar ist und die Prallplatte (32) von Armen (21) getragen ist, die um die horizontale Achse (22) schwenkbar und festlegbar am Rahmen (6) der Bodenfräse (2) befestigt sind, dadurch gekennzeichnet, daß die Prallplatte (32) mittels eines oder mehrerer Gelenkvierecke (30, 31) mittelbar oder unmittelbar an den Armen (21) angeschlossen ist, daß die Prallplatte (32) mittels der Gelenkvierecke (30, 31) gegenüber dem Rahmen (6) einstellbar ist, und daß an den gleichen Armen (21) eine Packerwalze (5) angeordnet ist.

2. Prallplatte nach Anspruch 1, dadurch gekennzeichnet, daß die Prallplatte (32) mit einer oberhalb der Prallplatte (32) liegenden zweiten Prallplatte (36) zusammenwirkt, die gelenkig am Rahmen (6) über eine horizontal liegende Achse (37) angeschlossen und in der gewählten Schwenklage feststellbar ist.

3. Prallplatte nach Anspruch 2, dadurch gekennzeichnet, daß die zweite Prallplatte (36) federbelastet (39) ist und daß das untere Ende (40) der zweiten Prallplatte (36) an der ersten Prallplatte (32) anliegt.

4. Prallplatte nach Anspruch 2, dadurch gekennzeichnet, daß die zweite Prallplatte (36) über mindestens einen starr oder elastisch längenveränderlichen Lenker (49) mit jeweils einem Arm (21) verbunden ist.

5. Prallplatte nach einem der Ansprüche 1 bis 4, dadurch gekennzeichnet, daß einer oder mehrere der Arme (21) über Spannschlösser oder Spindeln (23) gegenüber dem Rahmen (6) der Bodenfräse (2) abgestützt sind, wobei das Spannschloß bzw. die Spindel einerseits an den Armen (21) und andererseits am Rahmen (6) der Bodenfräse (2) mit Abstand zur horizontalen Achse (22) angreift.

6. Prallplatte nach einem der Ansprüche 1 bis 5, dadurch gekennzeichnet, daß zumindest ein Lenker (30, 31) des Gelenkvierecks längenverstellbar ist.

7. Prallplatte nach Anspruch 6, dadurch gekennzeichnet, daß zumindest ein Lenker (30, 31) des Gelenkvierecks als Spannschloß ausgebildet ist.

8. Prallplatte nach Anspruch 6, dadurch gekennzeichnet, daß zumindest ein Lenker (30, 31) in Form eines Teleskops (41, 42) ausgebildet ist, wobei die maximale Ausfahrlänge einstellbar ist.

9. Prallplatte nach Anspruch 8, dadurch gekennzeichnet, daß der Lenker (41, 42) eine Feder (48) aufweist, die der Verkürzung des Lenkers entgegenwirkt.

10. Prallplatte nach einem der Ansprüche 1 bis 9, dadurch gekennzeichnet, daß zur Verstellung des bzw. der Gelenkvierecke relativ zu dem Rahmen (6) der Bodenfräse (2) eine Verstelleinrichtung (33) dient, die entsprechend den Ansprüchen 8 oder 9 ausgebildet ist und je zwischen einem Arm (21) und einem Lenker (30, 31) des Gelenkvierecks eingeschaltet ist.

11. Prallplatte nach einem der Ansprüche 1 bis 9, dadurch gekennzeichnet, daß zur Verstellung des Gelenkvierecks an den Armen 21) angeordnete Widerlager (34, 35) dienen, die jeweils mit einem der Lenker (30, 31) des Gelenkvierecks zusammenwirken.

12. Prallplatte nach einem der Ansprüche 1 bis 9, dadurch gekennzeichnet, daß ein Lenker (31) jedes Gelenkvierecks an der Prallplatte (32) und am Arm (21) angeschlossen ist, daß der zweite Lenker (30) jedes Gelenkvierecks an einem Arm (53) angeschlossen ist, der fest mit dem ersten Lenker (31) verbunden ist und daß der Arm (53) über einen dritten Lenker (51) am Rahmen (6) der Bodenfräse (2) abgestützt ist.

13. Prallplatte nach einem der Ansprüche 1 bis 9, dadurch gekennzeichnet, daß der Arm (53) gelenkig am Arm (21) angeschlossen und über einen vierten, vorteilhaft längenveränderlichen Lenker mit dem Lenker (31) verbunden ist.

14. Prallplatte nach einem der Ansprüche 1 bis 13, dadurch gekennzeichnet, daß am Rahmen (6) der Bodenfräse (2) ein Saatkasten (17) befestigt ist und daß die Saatrohre (4) zwischen der Prallplatte (32) und der nachgeordneten Pakkerwalze (5) münden.

15. Prallplatte nach einem der Ansprüche 1 bis 14, dadurch gekennzeichnet, daß die Saatrohre (4) an der Rückseite der Prallplatte (32) befestigt sind.

16. Prallplatte nach einem der Ansprüche 1 bis 15, dadurch gekennzeichnet, daß die Saatrohre (4) relativ zur Prallplatte (32) verschiebbar ausgebildet sind.

## Claims

1. Baffle plate (32) in an implement combination (1) with a rotary hoe (2), the baffle plate being arranged in the direction of travel behind the rotary hoe (2) and being arranged, through a horizontally lying actual or ideal axis (22), pivotably on the frame (6) of the rotary hoe (2), and the height thereof and possibly also the inclination thereof relatively to the frame (6) of the rotary hoe (2) being adjustable, and the baffle plate (32) is supported by arms (21), which are swivellable about the horizontal axis (22) and can be fixed on the frame (6) of the rotary hoe (2), characterised in that the baffle plate (32) is connected, by means of one or more four-bar linkages (30, 31) indirecly or directly to the arms (21), that the baffle plate (32) is adjustable by means of the four-bar linkages (30, 31) with respect to the frame (6) and that a guide pulley (5) is arranged on the same arms (21).

2. Baffle plate according to claim 1, characterised in that the baffle plate (32) coacts with a second baffle plate (36) which is lying above the baffle plate (32) and which is pivotally connected to the frame (6) through a horizontally disposed shaft or axle (37) and can be secured in the chosen pivoted position.

3. Baffle plate according to claim 2, characterised in that the second baffle plate (36) is spring-loaded (39) and that the bottom end (40) of the second baffle plate (36) bears on the first baffle plate (32).

4. Baffle plate according to claim 2, characterised in that the second baffle plate (36) is connected to an arm (21) by way of at least one guide rod (49), the length of which is variable rigidly or elastically.

5. Baffle plate according to one of the claims 1 to 4, characterised in that one or more of the arms (21) are supported by way of turnbuckles or spindles (23) with respect to the frame (6) of the rotary hoe (2), the turnbuckle or respectively the spindle engaging on one side on the arms (21) and on the other side on the frame (6) of the rotary hoe (2) with spacing from the horizontal axis (22).

6. Baffle plate according to one of the claims 1 to 5, characterised in that at least one rod (30, 31) of the four-bar linkage is adjustable in length.

7. Baffle plate according to claim 6, characterised in that at least one rod (30, 31) of the four-bar linkage is constructed as a turnbuckle.

8. Baffle plate according to claim 6, characterised in that at least one rod (30, 31) is constructed in the form of a telescope (41, 42), the maximum run-out length being adjustable.

9. Baffle plate according to claim 8, characterised in that the rod (41, 42) comprises a spring (48), which counteracts the shortening of the rod.

10. Baffle plate according to one of the claims 1 to 9, characterised in that an adjustment means (33) serves for adjusting the four-bar linkage or linkages relatively to the frame (6) of the rotary hoe (2), said means (33) being constructed according to claims 8 or 9 and is engaged between an arm (21) and a rod (30, 31) of the four-bar linkage.

11. Baffle plate according to one of the claims 1 to 9, characterised in that abutments (34, 35) arranged on the arms (21) serve for the adjustment of the four-bar linkage, which abutments respectively coact with one of the rods (30, 31) of the four-bar linkage.

12. Baffle plate according to one of the claims 1 to 9, characterised in that one rod (31) of each four-bar linkage is connected to the baffle plate (32) and to the arm (21), that the second rod (30) of each four-bar linkage is connected to an arm (53) which is connected fast to the first rod (31) and that the arm (53) is supported by way of a third rod (51) on the frame (6) of the rotary hoe (2).

13. Baffle plate according to one of the claims 1 to 9, characterised in that the arm (53) is pivotally connected to the arm (21) and is connected to the rod (31) by way of a fourth rod, which advantageously is adjustable in length.

14. Baffle plate according to one of the claims 1 to 13, characterised in that a seed box (17) is fixed on the frame (6) of the rotary hoe (2) and that the seed tubes (4) discharge between the baffle plate (32) and the following guide pulley (5).

15. Baffle plate according to one of the claims 1 to 14, characterised in that the seed tubes (4) are fixed on the rear side of the baffle plate (32).

16. Baffle plate according to one of the claims 1 to 15, characterised in that the seed tubes (4) are constructed to be displaceable relatively to the baffle plate (32).

**Revendications**

1. Disposition de plaque d'arrêt (32) dans un outil combiné (1) comportant une fraiseuse de labour (2), dans laquelle la plaque d'arrêt est disposée en arrière de la fraiseuse de labour (2), dans la direction de déplacement, et est montée sur le châssis (6) de la fraiseuse de labour (2) de manière à pouvoir pivoter autour d'un axe horizontal réel ou fictif (22), et sa hauteur et éventuellement également son inclinaison, par rapport audit châssis (6), sont réglables, la plaque d'arrêt (32) étant portée par des bras (21) qui peuvent pivoter autour de l'axe horizontal (22) et être fixés fermement au châssis (6) de la fraiseuse de labour (2),

caractérisée en ce que la plaque d'arrêt (32) est raccordée, directement ou indirectement, aux bras (21), au moyen d'un ou de plusieurs quadrilatères articulés (30, 31), en ce que la plaque d'arrêt (32) est réglable par rapport au châssis (6) au moyen des quadrilatères articulés (30, 31), et en ce qu'un rouleau de compactage (5) est monté sur les mêmes bras (21).

2. Disposition de plaque d'arrêt selon la revendication 1, caractérisée en ce que la plaque d'arrêt (32) coopère avec une seconde plaque d'arrêt (36), qui est disposée au-dessus d'elle, est raccordée d'une manière articulée au châssis (6) par l'intermédiaire d'un axe horizontal (37) et peut être immobilisée dans l'orientation choisie.

3. Disposition de plaque d'arrêt selon la revendication 2, caractérisée en ce que la seconde plaque d'arrêt (36) est chargée par un ressort (39) et en ce que l'extrémité inférieure (40) de la seconde plaque d'arrêt (36) s'applique contre la première plaque d'arrêt (32).

4. Disposition de plaque d'arrêt selon la revendication 2, caractérisée en ce que la seconde plaque d'arrêt (36) est raccordée à chaque bras (21), par l'intermédiaire d'au moins une barre articulée rigide ou élastique (49), de longueur variable.

5. Disposition de plaque d'arrêt selon l'une des revendications 1 à 4, caractérisée en ce qu'un ou plusieurs des bras (21) prennent appui par l'intermédiaire de tendeurs ou de tringles (23) sur le châssis (6) de la fraiseuse de labour (2), le tendeur, ou la tringle, étant accroché d'une part aux bras (21) et d'autre part au châssis (6) de la fraiseuse de labour (2), à distance de l'axe horizontal (22).

6. Disposition de plaque d'arrêt selon l'une des revendications 2 à 5, caractérisée en ce qu'au moins une barre articulée (30, 31) du quadrilatère articulé est de longueur réglable.

7. Disposition de plaque d'arrêt selon la revendication 6, caractérisée en ce qu'au moins une barre (30, 31) du quadrilatère articulé est réalisée sous la forme d'un tendeur.

8. Disposition de plaque d'arrêt selon la revendication 6, caractérisée en ce qu'au moins une barre articulée (30, 31) est réalisée sous la forme d'un dispositif télescopique (41, 42) dont la longueur maximale de déploiement est réglable.

9. Disposition de plaque d'arrêt selon la revendication 8, caractérisée en ce que la barre articulée (41, 42) comporte un ressort (48) qui s'oppose au raccourcissement de cette barre articulée.

10. Disposition de plaque d'arrêt selon l'une des revendications 1 à 9, caractérisée en ce que le réglage du ou des quadrilatères articulés par rapport au châssis (6) de la fraiseuse de labour (2) est obtenu par un dispositif de réglage (33), qui est agencé conformément aux revendications 8 ou 9 et est monté chaque fois entre un bras (21) et une barre (30, 31) du quadrilatère articulé.

11. Disposition de plaque d'arrêt suivant l'une des revendications 1 à 9, caractérisée par le fait que le réglage du quadrilatère articulé est réalisé au moyen de butées (34, 35) qui sont situés sur les bras (21) et coopèrent respectivement avec l'une des barres (30, 31) du quadrilatère articulé.

12. Disposition de plaque d'arrêt selon l'une des revendications 1 à 9, caractérisée en ce qu'une barre (31) de chaque quadrilatère articulé est raccordée à la plaque d'arrêt (32) et au bras (21), en ce que la seconde barre (30) de chaque quadrilatère articulé est raccordée à un bras (53), qui est raccordé de façon fixe à la première barre articulée (31) et en ce que le bras (53) prend appui, par l'intermédiaire d'un troisième bras articulé (51), sur le châssis (6) de la fraiseuse de labour (2).

13. Disposition de plaque d'arrêt selon l'une des revendication 1 à 9, caractérisée en ce que le bras (53) est raccordé d'une manière articulée au bras (21) et est relié à la barre articulée (31) par l'intermédiaire d'un quatrième bras articulé, dont la longueur est avantageusement variable.

14. Disposition de plaque d'arrêt selon l'une des revendications 1 à 13, caractérisée en ce que le châssis (6) de la fraiseuse de labour (2) est fixé un réservoir à semence (17) et en ce que les tubes (4) délivrant la semence débouchent entre la plaque d'arrêt (32) et le rouleau de compactage (5) installé en aval.

15. Disposition de plaque d'arrêt selon l'une des revendications 1 à 14, caractérisée en ce que les tubes (15) délivrant la semence sont fixés au verso de la plaque d'arrêt (32).

16. Disposition de plaque d'arrêt selon l'une des revendications 1 à 15, caractérisée en ce que les tubes (4) délivrant la semence sont agencés de manière à être déplaçables par rapport à la plaque d'arrêt (32).

Fig.1

Fig.2

EP 0 313 835 B1

Fig. 3

Fig. 4